(19) Europäisches Patentamt
European Patent Office
Office européen des brevets

(11) Publication number: 0 019 290
B1

(12) EUROPEAN PATENT SPECIFICATION

(45) Date of publication of patent specification: 07.03.84

(51) Int. Cl.³: C 08 L 101/02, C 08 L 31/08, C 08 L 33/06, C 08 L 57/04, C 08 L 67/00 //C09D3/82

(21) Application number: 80102742.6

(22) Date of filing: 16.05.80

# (54) Curable composition.

(30) Priority: 17.05.79 JP 60700/79
29.08.79 JP 110731/79

(43) Date of publication of application:
26.11.80 Bulletin 80/24

(45) Publication of the grant of the patent:
07.03.84 Bulletin 84/10

(84) Designated Contracting States:
BE DE FR GB IT

(56) References cited:
DE - A - 2 837 830
FR - A - 2 202 109
GB - A - 1 125 469
GB - A - 1 143 570
GB - A - 1 200 756
GB - A - 1 415 194
US - A - 3 678 010

(73) Proprietor: KANEGAFUCHI KAGAKU KOGYO KABUSHIKI KAISHA
2-4 Nakanoshima 3-chome
Kita-ku Osaka-shi (JP)

(72) Inventor: Kato, Yasushi
1-27-14, Katayama-cho Nagata-ku
Kobe-shi Hyogo-ken (JP)
Inventor: Matsumura, Shoich
14-2, 1-chome, Takakuradai Suma-ku
Kobe-shi Hyogo-ken (JP)
Inventor: Furukawa, Hisao
Sanseiso, 96-1, Aza-Takigahira Shioya-cho
Tarumi-ku Kobe-shi Hyogo-ken (JP)
Inventor: Nakatsuka, Saori
11-20, Hama-cho Ashiya-shi
Hyogo-ken (JP)

(74) Representative: Vossius Vossius Tauchner Heunemann Rauh
Siebertstrasse 4 P.O. Box 86 07 67
D-8000 München 86 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 019 290 B1

# Curable composition

The present invention relates to a composition containing silyl groups which can be readily cured upon exposure to moisture in air at room temperature or at higher temperatures.

Compounds containing reactive silyl groups have been used generally for paints, coating materials, rubber adhesives, sealants and similar because of their high reactivity; in particular compounds containing condensation curing silyl groups having hydroxy groups, alkoxy groups and the like as reactive groups are used for various purposes. While for compounds of the condensation type the reaction can be advanced even without a catalyst thanks to moisture in the atmosphere, it is usual to use curing catalysts. Organotin compounds such as dibutyltin dilaurate, dibutyltin dimaleate and the like are well known as curing catalysts. However, when they are used the curing speed of the condensation type compounds is slow; in other words curing is hardly promoted at all by heating at 60 to 80°C and the compounds set only slowly even at 120 to 300°C.

Consequently it was necessary to find out catalysts which can promote the curing of compounds of the condensation type faster than the conventional organotin compounds. The conventional catalysts have proved inadequate for uses such as the repair of cars or the painting of bridges when rapid drying, simplicity of the painting equipment and the like are required.

GB—A 1,125,469 discloses a room temperature curable material comprising the reaction product of an uncrosslinked organic polymer and a silane. The composition may further contain fillers and a curing catalyst. Primary, secondary and tertiary amines are mentioned as possible condensation catalysts. In the practical examples, however, organic titanium or tin compounds are used exclusively.

The object of the present invention is to provide curable coating or sealing compositions which cure readily upon exposure to moisture.

After studying various kinds of catalysts, the inventors of the present application found that faster curing and better quality compositions containing silyl groups having hydrolyzable groups can be obtained if an organic amine and an alkali metal hydroxide or an organic amine and a reactive silicon compound or an alkali metal hydroxyde and a reactive silicon compound or an organic amine, an alkali metal hydroxide and a reactive silicon compound are added as condensation catalyst to the composition.

The compounds containing silyl groups which are used in the present invention may in general be obtained by an addition reaction of silicon hydride compounds with compounds having terminal or side-chain carbon-carbon double bonds in the presence of a platinum catalyst. (1) Polyesters, (2) ether ester block copolymers, (3) vinyl polymers, (4) diallyl phthalate monomer or prepolymer, (5) copolymers of diallyl phthalate and the like are among those compounds having terminal or side-chain carbon-carbon double bonds which are suitable for use as coating materials, rubber adhesives, sealants and the like.

Polyesters having terminal or side-chain carbon-carbon double bonds may be obtained by reacting, for example, a polyester having terminal hydroxy groups (e.g. DESMOPHEN manufactured by Nippon Polyurethane Co., Ltd.) with acryloylchloride in the presence of a base such as sodium hydride, by a condensation reaction of dibasic acids with diols which partially consist of allyl glycidyl ether, by an interchange reaction of polyesters having terminal hydroxyl groups with diallyl esters such as diallyl phthalate in the presence of a transesterification catalyst such as p-toluene sulfonic acid, or else by a condensation reaction of dibasic acids with diols under excessively acidic conditions and then esterification of the condensation products with allyl alcohol during or after said condensation reaction. Furthermore, polyesters having olefinic groups of the allyl type in their molecule may be obtained by reacting acid anhydrides with epoxy compounds and alcohols of the allyl type, to regulate the molecular weight of polyesters by using alcohols and simultaneously to introduce allyl groups into them in the presence of tertiary amines or quaternary ammonium salts, or else by using allyl glycidyl ether as one component of the epoxy compounds. Polyesters having terminal acryloyl or methacryloyl groups may be obtained by a condensation reaction of diols with dibasic acids and acrylic acid (or methacrylic acid) according to known methods.

Vinyl polymers having carbon-carbon double bonds may be obtained by radical copolymerization of allyl acrylate, allyl methacrylate and the like with homopolymers or copolymers of vinyl compounds such as styrene, $\alpha$-methylstyrene, acrylic acid and its esters, methacrylic acid and its esters, acryl amide, vinyl acetate, ethylene, maleic anhydride and the like.

Diallyl phthalate compounds having carbon-carbon double bonds include monomers or prepolymers of diallyl phthalate. Commercially available compounds may be used.

Copolymers of diallyl phthalate having carbon-carbon double bonds and acrylic esters or methacrylic esters can be obtained using initiators such as azo compounds, peroxides and the like. The number of double bonds can be regulated by modifying the amount of diallyl phthalate added as a component of the copolymerization.

Silicon hydride compounds include silane halogenides such as trichlorosilane, methyldichlorosilane, dimethylchlorosilane and phenyldichlorosilane; alkoxysilanes such as trimethoxysilane, triethoxysilane, methyldimethoxysilane, methyldiethoxysilane and phenyldimethoxysilane; acyloxysilanes such as methyldiacetoxysilane and phenyldiacetoxysilane; ketoxymatesilanes (silane

compounds containing a ketoximate group) such as bis-(dimethylketoxymate)methylsilane and bis-(cyclohexylketocymate)methylsilane and the like. Vinyl polymers containing silyl groups obtained by copolymerization of silyl compounds containing vinyl groups such as vinyltrimethoxysilane, $\alpha$-methacryloxypropyltrimethoxysilane and $\alpha$-methacryloxypropylmethyldimethoxysilane and vinyl compounds such as styrene, $\alpha$-methylstyrene, acrylic acid and its esters, methacrylic acid and its esters, acryl amides, vinyl acetate, ethylene and maleic anhydride may also be used as silicon hydride compounds. Silicon-containing polymers can be obtained by the reaction of organic polymers containing epoxy groups such as copolymers of vinyl compounds and glycidyl methacrylate or epoxy polymers with $\gamma$-aminopropyltrimethoxysilane, or by the reaction of organic polymers such as polyesters containing carboxy groups or vinyl polymers with $\gamma$-glycidoxypropyltrimethoxysilane.

Compounds containing silyl groups obtained in this way have at least one hydrolyzable group bonded to a silicon atom and can be cured upon exposure to moisture in air. While various kinds of silyl groups may be obtained by different methods of preparation, they are encompassed by the following general formula:

$$X_{3-a}-\overset{(R^1)_a}{\overset{|}{Si}}-\overset{R^2}{\overset{|}{CH}}-$$

wherein $R^1$ and $R^2$ designate hydrogen atoms or alkyl, aryl and aralkyl groups containing up to 10 carbon atoms; X is a hydrolyzable group, preferably a halogen atom or an alkoxy, hydroxy, aminoxy, phenoxy, thioalkoxy or amino group; and a designates an integer of 0 to 2.

The compounds containing silyl groups used in the compositions of the invention have a molecular weight of from 300 to 30,000.

The following organic amines may be used: Aliphatic diamines such as ethylene diamine and hexane diamines, e.g. 1,6 diaminehexane; aliphatic polyamines such as diethylene triamine, triethylene tetramine and tetraethylene pentamine; aliphatic cyclic amines such as piperazine and piperidine; aromatic amines such as m-phenylene diamine; ethanol amines; triethylamine or the like. Also various kinds of denatured amines, polyamide resins and the like which are used as hardeners for epoxy resins may be used. Preferred is the use of such organic amines together with reactive silicon compounds, in particular those which are known as coupling agents. It leads to an improvement in characteristics and film adherence. Commercially available silane coupling agents may be used. They are described by the following general formula:

$$Y_{3-b}-\overset{(R^3)_b}{\overset{|}{Si}}-Z$$

wherein $R^3$ designates an alkyl, aryl or aralkyl group containing up to 10 carbon atoms; Y designates a halogen atom, an alkoxy or acyloxy group; Z designates a monovalent hydrocarbon group containing amino groups, epoxy groups or mercapto groups; and b designates an integer of 0 to 2. For example, they include $\gamma$-aminopropyltriethoxysilane, N-$\beta$-(aminoethyl)-$\gamma$-aminopropyltrimethoxysilane, $\gamma$-glycidoxypropyltrimethoxysilane, $\beta$-(3,4-epoxycyclohexyl)ethyltrimethoxysilane, $\gamma$-mercaptopropyltrimethoxysilane, vinyltriethoxysilane, vinyl-tris-(2-methoxyethoxy)silane, vinyltrichlorosilane, methylvinyldichlorosilane, $\gamma$-methacryloxypropyltrimethoxysilane and the like.

Sodium hydroxide and potassium hydroxide are preferably used as alkali metal hydroxides from the viewpoint of their general characteristics and solubility in alcohols.

Reactive silicon compounds which have functional groups such as an —OR group or —OH group and the like bonded to a silicon atom and which can be subjected to condensation reaction with each other, preferably reacting with compounds containing silyl groups, for example said silane coupling agents or their reaction mixtures or ethyl silicate or its partially hydrolyzed products, can be used effectively. The above-described silane coupling agents can also be used here. The reaction mixtures of silane coupling agents include, for example, the reaction products obtained by heating the mixture of a silane coupling agent containing amino groups and a silane coupling agent containing epoxy groups at 60 to 100°C. Ethyl silicate 40 HAS—1 (made by Japan Colcoat Co.) and the like can be used as a partially hydrolyzed product of ethyl silicate.

The amounts of the different components which form the compositions of the present invention is not especially limited, but is determined as required in accordance with the envisaged use. In general applications when the composition is used as a coating agent such as paint, 0.1 to 30 parts by weight, preferably 0.1 to 5 parts by weight, of at least one organic amine and, furthermore, 0 to 10 parts by weight, preferably 0.1 to 5 parts by weight, of at least one silane coupling agent may be added to 100 parts by weight of a compound containing silyl groups.

Also 0.01 to 10 parts by weight, preferably 0.1 to 5 parts by weight, of at least one alkali metal hydroxide and, furthermore, 0.1 to 10 parts by weight, preferably 0.1 to 5 parts by weight, of at least one silane coupling agent or their reaction mixtures, or else 0 to 100 parts by weight, preferably 0.1 to 50 parts by weight, of ethyl silicate or its partially hydrolyzed products may be added to 100 parts by

weight of the compound containing silyl groups. The addition of a silane coupling agent or a reaction mixture of the agents can noticeably improve the setting speed and impact strength of the cured composition. Furthermore, the addition of ethyl silicate or its partially hydrolyzed products can noticeably improve the stain resistance, adherence, impact resistance, solvent resistance and boiling water resistance of the cured composition.

The composition according to the present invention may contain diluents, solvents and additives in addition to the above-mentioned components. If necessary, for example if paint with a high solids content is required, i.e. if it is required to reduce the amount of solvent, then preferably 50 parts by weight or less of ethyl silicate, an organopolysiloxane or similar are added to 100 parts by weight of a compound containing silyl groups.

The composition according to the present invention can be cured even at room temperature by using an organic amine and/or an alkali metal hydroxide, and accordingly said composition is useful for the repair of cars, for paint for car bumpers, for precoating metals, for heavy duty protection against corrosion of bridges and the like, for paint for building materials and so on. Furthermore, the composition of the invention is useful as a coating material and adhesive for various sorts of substrates such as iron sheet coated with zinc, aluminium, glass, plastics and rubber. Pigments, fillers and the like may also be added to the composition if necessary. According to the given circumstances, the composition may further be mixed with a known lacquer paint, acryl lacquer paint, thermosetting acryl paint, alkyd paint, epoxy paint or similar in suitable proportions.

The present invention will be concretely explained referring to the embodiments described below.

### Example 1

148 g of phthalic anhydride, 46.4 g of propylene oxide, 22.8 g of allyl glycidyl ether, 11.6 g of allyl alcohol and 0.5 g of dimethyl benzylamine held in a metal autoclave having a capacity of 1 liter are heated at 100°C. After 3 hours from the start of the reaction, 46 g of propylene oxide is added and the reaction is then continued for 1 hour. Then the excess of propylene oxide is removed to give a polyester having a molecular weight of 1,200. The mixture obtained by adding 9.5 g of acetic anhydride to 100 g of said polyester is heated at 120°C for 2 hours and then the excess acetic anhydride is removed from the reaction mixture under vacuum. 22.2 g of the polyester obtained were treated in the presence of 0.0035 g of chloroplatinic acid with 8.65 g of methyldichlorosilane at 80°C for 3 hours. The excess methyldichlorosilane is removed under vacuum. Then 20 ml of methanol and 20 ml of methyl orthoformate are added and the mixture is stirred at room temperature for 1 hour and low boiling substances are removed from the reaction mixture under vacuum to give a polyester containing silyl groups.

### Example 2

A mixture consisting of 30 g of styrene, 16 g of allyl methacrylate, 20 g of methyl methacrylate, 19 g of n-butyl methacrylate, 14 g of n-butyl acrylate, 1 g of acrylic acid and a solution of 2 g of azo-bis-isobutylonitrile in 2 g of n-dodecyl mercaptane is added dropwise to 100 g of toluene at 90°C. After 10 hours a vinyl polymer containing unsaturated groups fo the allyl type and having a molecular weight of 8,000 is obtained. The vinyl polymer which was obtained in this manner showed an absorption owing to the carbon-carbon double bond at 1,648 $cm^{-1}$ in its infra-red absorption spectrum.

A solution of methyldimethoxysilane (1.5 g) and 0.0005 g of chloroplatinic acid in isopropanol is added to said solution of the vinyl copolymer containing unsaturated groups of the allyl type (20 g) and the mixture is heated at 90°C for 6 hours under sealed conditions. The reaction mixture did not show an absorption at 1,648 $cm^{-1}$ in its infra-red absorption spectrum. A vinyl polymer containing silyl groups was obtained.

### Example 3

A copolymer of the diallyl phthalate type containing silyl groups is obtained by the same reaction as shown in Example 2, except that diallyl phthalate (31 g) is used instead of the 16 g of allyl methacrylate.

### Example 4

A mixture consisting of 30 g of styrene, 27 g of $\gamma$-methacryloxypropyltrimethoxysilane, 20 g of methyl methacrylate, 19 g of n-butyl methacrylate, 14 g of n-butyl acrylate, 1 g of acrylic acid and a solution of 2 g of azo-bis-isobutylonitrile in 2 g of n-dodecyl mercaptane is added dropwise to toluene (100 g) at 100°C. After 10 hours a vinyl polymer containing silyl groups and having a molecular weight of 9,000 was obtained.

### Example 5

100 g of a prepolymer of diallyl phthalate (Dap L made by Osaka Soda Co., Ltd.; iodine value of about 80), 0.00001 g of chloroplatinic acid and 1 g of hydroquinone are dissolved in 100 g of toluene. 35 ml of methyldiethoxysilane are then added to the solution. The mixture is heated at 90°C for 3 hours to give a prepolymer of diallyl phthalate containing silyl groups.

Three types of test piece, A, B and C were prepared using the inventive compositions as shown below.

Test piece A: To 100 parts by weight (as a solid content) of the resulting compositions containing silyl groups which had been prepared in Examples 1 to 5 were added 100 parts by weight of titanium

oxide and mixed to form an enamelized state, and subsequently an organic amine and a silane coupling agent were admixed therewith. The resulting composition was coated onto a soft iron plate in the proportions shown in Table 1 and this was then heated at 60°C for 30 minutes.

Test piece B: The same procedures as above under A were repeated, except that alkali metal hydroxides were used in place of organic amines.

Test piece C: 100 parts by weight of the compound containing silyl groups (as a solid content) prepared in Example 2 were admixed with an organic amine and with an alkali metal hydroxide as shown in Table 1, and then the resulting mixture was treated in the same manner as in preparing test piece A.

The above test pieces were tested as to their pencil hardness, Du Pont impact strength, spot test and stain resistance. Pencil hardness was determined according to JIS K5400. Spot test was carried out by dropping one or two drops of lacquer thinner and toluene on each of the test pieces and observing them after evaporating the solvent. The marks O and × were awarded to test pieces which showed no defects and to test pieces which showed dissolution or swelling (swelling or peeling), respectively. The stain resistance test was carried out by applying a coat of rouge and oily marking ink (black, red) (made by Teranishi Kagku Co., Ltd.) and observing the surfaces of the test pieces after removing the rouge and oily marking ink using methanol. O, △ and × were given to test pieces from which the rouge and oily marking ink were completely removed, those from which they were partially removed and those on which the rouge and ink almost completely remained, respectively.

The results of similar tests for cases where the conventional dibutyltin dilaurate is used as a catalyst are shown for comparison in Table 1.

In Table 1, 3—A—1 means that the test piece A using the silyl group-containing composition prepared in Example 3 was employed for the tests as run 1.

TABLE 1

| | Curing catalyzer | | | Spot test | | | Stain resistance | | |
|---|---|---|---|---|---|---|---|---|---|
| Example | Organic amine or alkali metal hydroxide (Parts) | Reactive silicon compounds (Parts) | Pencil hard-ness | Lacquer thinner | Toluene | Du Pont impact strength 1/2" 1 kg (cm) | Rouge | Black oily marking ink | Red oily marking ink |
| 1—A—1 (Control) | Triethylene tetramine (2) | | H | O | × | 50 | O | O | △ |
| 1—A—2 | Triethylene tetramine (2) | A—187* (1) | H | O | O | 50 | O | O | O |
| 1—B—1 | NaOH (0.5) | A—187* (1) | H | O | O | 50 | O | O | △ |
| 2—A—1 (Control) | Q—631* (2) | | 2H | O | × | 30 | O | O | △ |
| 2—A—2 | Q—631 (2) | A—1120 (1) | 2H | O | O | 50 | O | O | O |
| 2—B—1 | KOH (0.5) | A—187 (0.5) Ethyl silicate (5) | 2H | O | O | 50 | O | O | O |
| 2—B—2 (Control) | KOH (1) | | H | O | O | 30 | △ | O | △ |
| Com-parative Example 2 | Dibutyltin dilaurate (2) | | HB | × | × | 10 | × | × | × |

TABLE 1 (continued)

| Example | Curing catalyzer | | Pencil hard-ness | Spot test | | Du Pont impact strength 1/2" 1 kg (cm) | Stain resistance | | |
|---|---|---|---|---|---|---|---|---|---|
| | Organic amine or alkali metal hydroxide (Parts) | Reactive silicon compounds (Parts) | | Lacquer thinner | Toluene | | Rouge | Black oily marking ink | Red oily marking ink |
| 3—A—1 (Control) | Piperidine (3) | | 2H | ○ | × | 30 | ○ | ○ | △ |
| 3—A—2 | Piperidine (3) | γ-aminopropyltri-ethoxysilane (2) | 2H | ○ | ○ | 50 | ○ | ○ | ○ |
| 3—B—1 | NaOH (1) | Ethyl silicate (5) | 2H | ○ | ○ | 50 | ○ | ○ | △ |
| 3—B—2 | NaOH (0.5) | A—1120 (1) | 2H | ○ | ○ | 50 | ○ | ○ | △ |
| 4—A—1 (Control) | Monoethanol amine (2) | | 2H | ○ | ○ | 30 | ○ | ○ | △ |
| 4—A—2 | Monoethanol amine (2) | A—189 (1) | 2H | ○ | ○ | 50 | ○ | ○ | ○ |
| 4—B—1 | NaOH (1) | (A—187 A—1120)* (0.5) | 2H | ○ | ○ | 50 | ○ | ○ | ○ |
| 4—B—2 (Control) | NaOH (1) | | H | ○ | ○ | 30 | △ | ○ | △ |
| Com-parative Example 4 | Dibutyltin dilaurate (4) | | F | × | × | 10 | △ | △ | △ |
| 5—A—1 | Triethyl amine (1) | Vinyltriethoxy-silane (1) | 2H | ○ | ○ | 30 | ○ | ○ | △ |
| 5—B—1 | KOH (0.5) | A—189 (1) | 2H | ○ | ○ | 30 | ○ | ○ | △ |
| 2—C—1 | Tetraethylene pentamine (1) | KOH (1) | 2H | ○ | ○ | 40 | ○ | ○ | △ |

Footnotes to Table 1

| | | |
|---|---|---|
| A—187 | Made by UCC | $\gamma$-glycidoxypropyltrimethoxysilane |
| Q—631 | Made by Mitsui Petrochemical Epoxy Co., Ltd. | Curing agent for epoxy resin |
| A—1120 | Made by UCC | N-$\beta$-(aminoethyl)-$\gamma$-aminopropyltrimethoxysilane |
| A—189 | Made by UCC | $\gamma$-mercaptopropyltrimethoxysilane |
| (A—187 / A—1120) | | The product obtained by reacting A—187 with A—1120 at 90°C for 3 hours |

**Claims**

1. A curable coating or sealing composition containing as effective ingredients (A) a polyester, ether ester block copolymer, vinyl polymer, diallyl phthalate monomer or prepolymer or diallyl phthalate copolymer containing in the molecule at least one silyl group having at least one hydrolyzable group, or a mixture of at least two of the said polymers, the polymers having a molecular weight of from 300 to 30,000, and

(B) a condensation catalyst, characterized in that it contains as component (B) an organic amine and an alkali metal hydroxide or an organic amine and a reactive silicon compound or an alkali metal hydroxide and a reactive silicon compound or an organic amine, an alkali metal hydroxide and a reactive silicon compound.

2. The composition of Claim 1, wherein said component (A) is a polyester having a molecular weight of from 300 to 8,000.

3. The composition of Claim 1, wherein said component (A) is a vinyl polymer having a molecular weight of from 300 to 20,000.

4. The composition of Claim 1, wherein said component (A) is a diallyl phthalate monomer or a prepolymer of diallyl phthalate having a molecular weight of up to 20,000.

5. The composition of Claim 1, wherein said component (A) is a homopolymer of diallyl phthalate or a copolymer of diallyl phthalate with an acrylic ester or a methacrylic ester having a molecular weight of from 300 to 20,000.

6. The composition of Claim 3, wherein said vinyl polymer contains units of an acrylic ester and/or a methacrylic ester.

7. The composition of Claim 5, wherein the diallyl phthalate content of the said polymers is 5 to 100 mol %.

8. The composition according to Claim 1, wherein the silyl group has the formula:

$$X_{3-a}-\overset{(R^1)_a}{\overset{|}{Si}}-\overset{R^2}{\overset{|}{CH}}-$$

wherein $R^1$ and $R^2$ are hydrogen atoms or alkyl, aryl or aralkyl groups containing up to 10 carbon atoms, X is a hydrolyzable group, and a is an integer of 0 to 2.

9. The composition of Claim 1, wherein said component (B) is a mixture of an organic amine and an alkali metal hydroxide.

10. The composition of Claim 1, wherein at least one silane coupling agent is used as said reactive silicon compound.

11. The composition of Claim 0, wherein the functional group of said silane coupling agent is an amino group.

12. The composition of Claim 10, wherein the functional group of said silane coupling agent is an epoxy group.

13. The composition of Claim 10, wherein the functional group of said silane coupling agent is a mercapto group.

14. The composition of Claim 10, wherein the functional group of said silane coupling agent is a vinyl group.

15. The composition of Claim 1, wherein said reactive silicon compound is methyl silicate, ethyl silicate or their hydrolyzed products.

**Revendications**

1. Composition de revêtement ou de sellement durcissable contenant comme ingrédients actifs:
(A) un polyester, un copolymère bloc d'éther et d'ester, un polymère vinylique, un monomère ou

prépolymère de diallyl phtalate ou un copolymère de diallyl phtalate contenant dans la molécule au moins un groupe silyle comportant au moins un groupe hydrolysable, ou un mélange d'au moins deux de ces polymères, les polymères ayant un poids moléculaire de 300 à 30.000, et

(B) un catalyseur de condensation, caractérisée en ce qu'elle contient comme composant (B) une amine organique et un hydroxyde de métal alcalin ou une amine organique et un composé de silicium réactif ou un hydroxyde de métal alcalin et un composé de silicium réactif ou une amine organique, un hydroxyde de métal alcalin et un composé de silicium réactif.

2. Composition suivant la revendication 1, dans laquelle le composant (A) est un polyester ayant un poids moléculaire de 300 à 8.000.

3. Composition suivant la revendication 1, dans laquelle le composant (A) est un polymère vinylique ayant un poids moléculaire de 300 à 20.000.

4. Composition suivant la revendication 1, dans laquelle le composant (A) est un monomère de diallyl phtalate ou un prépolymère de diallyl phtalate ayant un poids moléculaire allant jusqu'à 20.000.

5. Composition suivant la revendication 1, dans laquelle le composant (A) est un homopolymère de diallyl phtalate ou un copolymère de diallyl phtalate avec un ester acrylique ou un ester méthacrylique ayant un poids moléculaire de 300 à 20.000.

6. Composition suivant la revendication 3, dans laquelle le polymère vinylique contient des unités d'un ester acrylique et/ou d'un ester méthacrylique.

7. Composition suivant la revendication 5, dans laquelle la teneur en diallyl phtalate desdits polymères est de 5 à 100 moles %.

8. Composition suivant la revendication 1, dans laquelle le groupe silyle répond à la formule:

$$X_{3-a}-\overset{\overset{\displaystyle (R^1)_a}{|}}{Si}-\overset{\overset{\displaystyle R^2}{|}}{CH}-$$

dans laquelle $R^1$ et $R^2$ représentent des atomes d'hydrogène ou des groupes alkyle, aryle ou aralkyle contenant jusqu'à 10 atomes de carbone, X est un groupe hydrolysable, et a est un nombre entier de 0 à 2.

9. Composition suivant la revendication 1, dans laquelle le composant (B) est un mélange d'une amine organique et d'un hydroxyde de métal alcalin.

10. Composition suivant la revendication 1, dans laquelle on utilise au moins un agent de couplage au silane comme composé de silicium réactif.

11. Composition suivant la revendication 10, dans laquelle le groupe fonctionnel de l'agent de couplage au silane est un groupe amino.

12. Composition suivant la revendication 10, dans laquelle le groupe fonctionnel de l'agent de couplage au silane est un groupe époxy.

13. Composition suivant la revendication 10, dans laquelle le groupe fonctionnel de l'agent de couplage au silane est un groupe mercapto.

14. Composition suivant la revendication 10, dans laquelle le groupe fonctionnel de l'agent de couplage au silane est un groupe vinylique.

15. Composition suivant la revendication 1, dans laquelle le composé de silicium réactif est du silicate de méthyle, du silicate d'éthyle ou leurs produits hydrolysés.

**Patentansprüche**

1. Härtbare Beschichtungs- oder Versiegelungsmasse, enthaltend als wirksame Bestandteile

(A) einen Polyester, ein Äther-Ester-Blockcopolymerisat, ein Vinylpolymerisat, einen monomeren Phthalsäurediallylester, ein Vorpolymerisat davon oder ein Phthalsäurediallylester-Copolymerisat, welche im Molekül mindestens eine Silylgruppe mit mindestens einer hydrolysierbaren Gruppe aufweisen, oder ein Gemisch von mindestens zwei der genannten Polymerisate, wobei die Polymerisate ein Molekulargewhicht von 300 bis 30 000 besitzen, und

(B) einen Kondensationskatalysator, dadurch gekennzeichnet, daß sie als Komponente (B) ein organisches Amin und ein Alkalimetallhydroxid oder ein organisches Amin und eine reaktive Siliciumverbindung oder ein Alkalimetallhydroxid und eine reaktive Siliciumverbindung oder ein organisches Amin, ein Alkalimetallhydroxid und einer reaktive Siliciumverbindung enthält.

2. Masse nach Anspruch 1, in der die Komponente (A) ein Polyester mit einem Molekulargewicht von 300 bis 8000 ist.

3. Masse nach Anspruch 1, in der die Komponente (A) ein Vinylpolymerisat mit einem Molekulargewicht von 300 bis 20 000 ist.

4. Masse nach Anspruch 1, wobei die Komponente (A) ein monomerer Phthalsäurediallylester oder ein Vorpolymerisat von Phthalsäurediallylester mit einem Molekulargewicht bis zu 20 000 ist.

5. Masse nach Anspruch 1, in der die Komponente (A) ein Phthalsäurediallylester-Homo-polymerisat oder -Copolymerisat mit einem Acrylsäureester oder Methacrylsäureester mit einem Molekulargewicht von 300 bis 20 000 ist.

6. Masse nach Anspruch 3, in der das Vinylpolymerisat Acrylsäureester- und/oder Methacrylsäureestereinheiten enthält.

7. Masse nach Anspruch 5, in der der Gehalt an Phthalsäurediallylester in den Polymerisaten 5 bis 100 Molprozent beträgt.

8. Masse nach Anspruch 1, in der Silylgruppe die Formel

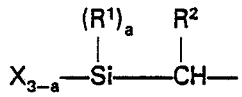

aufweist, in der $R^1$ und $R^2$ Wasserstoffatome oder Alkyl-, Aryl- oder Aralkylreste mit bis zu 10 Kohlenstoffatomen bedeuten, X eine hydrolysierbare Gruppe ist und a eine ganze Zahl im Wert von 0 bis 2 ist.

9. Masse nach Anspruch 1, in der die Komponente (B) ein Gemisch aus einem organischen Amin und einem Alkalimetallhydroxid ist.

10. Masse nach Anspruch 1, in der mindestens ein Silan-Kopplungsmittel als reaktive Siliciumverbindung verwendet wird.

11. Masse nach Anspruch 10, in der die funktionelle Gruppe des Silan-Kopplungsmittels eine Aminogruppe ist.

12. Masse nach Anspruch 10, in der die funktionelle Gruppe des Silan-Kopplungsmittels eine Epoxygruppe ist.

13. Masse nach Anspruch 10, in der die funktionelle Gruppe des Silan-Kopplungsmittels eine Mercaptogruppe ist.

14. Masse nach Anspruch 10, in der die funktionelle Gruppe des Silan-Kopplungsmittels eine Vinylgruppe ist.

15. Masse nach Anspruch 1, in der die reaktive Siliciumverbindung Methylsilikat, Äthylsilikat oder ein hydrolysiertes Produkt davon ist.